# EUROPEAN PATENT APPLICATION

(11) **EP 2 075 209 A1**
(43) Date of publication of application: **01.07.2009**
(21) Application number: 07425827.8
(22) Date of filing: 28.12.2007
(51) Int. Cl.: B65H 59/40, G01D 3/024, G01L 1/22

(54) **Yarn tension measuring apparatus**

(71) Applicant: L.G.L. Electronics S.p.A., 24024 Gandino (Bergamo) (IT)
(72) Inventor: Gotti, Andrea, 24021 Albino (BG) (IT); Valda, Andrés Raymundo, 24026 Cazzano Sant'Andrea (BG) (IT); Ruggeri, Mirko, 24026 Leffe (BG) (IT)
(74) Representative: Spandonari, Carlo

(57) **Abstract**

A tension sensor (10) measures the yarn tension (T) and generates an electric output signal (Vout) that is variable as a function of the yarn tension. The apparatus is provided with amplification means (AMP, INA, PGA) for said output signal (Vout), which have a gain value (G) that is variable under control of digital pulses, and analog-to-digital conversion means for said electric output signal (Vout), which generate a digital output signal (VD). A control unit (CU) receives the digital output signal (VD) and is programmed to control the amplification means (AMP, INA, PGA) with digital pulses defining command signals (DI) adapted to select a desired gain.

## Description

The present invention relates to a yarn tension measuring apparatus for use in yarn-feeding lines.

As known, tension sensors are used in the modem yarn-processing machines such as textile looms, knitting machines, spoolers, and the like, for measuring and controlling the yarn tension in order to maintain it substantially constant, and in particular for eliminating fluctuations of the tension which could generate defects in the finished articles and reduce the production output. Such sensors can also be incorporated in yarn feeders.

The above sensors are provided with a flexible member which mechanically interacts with the yarn in such a way as to bend in proportion to the yarn tension. Such bending is measured and converted into an electric signal by known means, e.g., a measuring bridge which makes use of strain gages of a metal alloy or of resistors incorporated in the flexible member by thick film technology, or a permanent magnet cooperating with a Hall sensor. Therefore, the generated electric signal is proportional to the yarn tension, with a proportionality ratio defining the so-called "gain" of the sensor.

Since the electric signal generated by the sensor is generally very low, for example a few tenths of mV in case of a sensor with a voltage output, the measuring apparatus is also provided with an electronic amplification stage.

However, since nominally identical sensors may have slightly different gains due to the mechanical and electrical tolerances, a gain-tuning procedure is required which, until today, has been carried out by manually changing the value of a trimmer by means of an adjusting screw, so that an electric signal is obtained which has a predetermined amplitude when the sensor is loaded by a yarn subjected to a nominal tension suitable for the procedure.

The above manual operation has the drawback that it has a low repeatability and is also rather difficult and time-consuming.

Furthermore, it would be desirable to change the gain, on which the resolution of the measurement depends, even with the machine in use, in order to optimize the gain on the basis of the average tension value, which may considerably change depending on the machining. In particular, when the process envisages relatively high average tensions, e.g., 50 g, a lower resolution, e.g. of 1 g, would be satisfactory, while a higher resolution, e.g. of 0,1 g, would be desirable when the process envisages average tensions of a few grams only, e.g., 5 g. If a high resolution was used over the whole detection range of the sensor, e.g., 0 to 100 g, A/D converters having a higher number of bits would be necessary, in order to provide a higher number of different combinations each corresponding to a specific discrete value of the range, with consequent rise in the costs.

Therefore, it is a main object of the invention to provide a yarn tension measuring apparatus which allows the gain-tuning procedure to be partially, or even completey, automatized.

It is another object of the invention to provide a yarn tension measuring apparatus having higher performances, for substantially equal cost, than the known systems, in in relation to the accuracy of measurement.

The above objects and other advantages, which will better appear below, are achieved by an apparatus having the features recited in claim 1, while the dependent claims define other advantageous, though secondary features, of the invention.

The invention will be now described in more detail, with reference to preferred, non-exclusive embodiments, shown by way of non-limiting example in the attached drawings, wherein:
- Fig. 1 diagrammatically shows a yarn tension measuring apparatus according to the invention;
- Fig. 2 diagrammatically shows the electric circuit which controls the yarn tension measuring apparatus according to the invention;
- Fig. 3 diagrammatically shows the electric circuit which controls the yarn tension measuring apparatus according to a second embodiment of the invention;
- Fig. 4 diagrammatically shows the electric circuit which controls the yarn tension measuring apparatus according to a third embodiment of the invention;
- Fig. 5 diagrammatically shows the electric circuit which controls the yarn tension measuring apparatus according to a fourth embodiment of the invention.

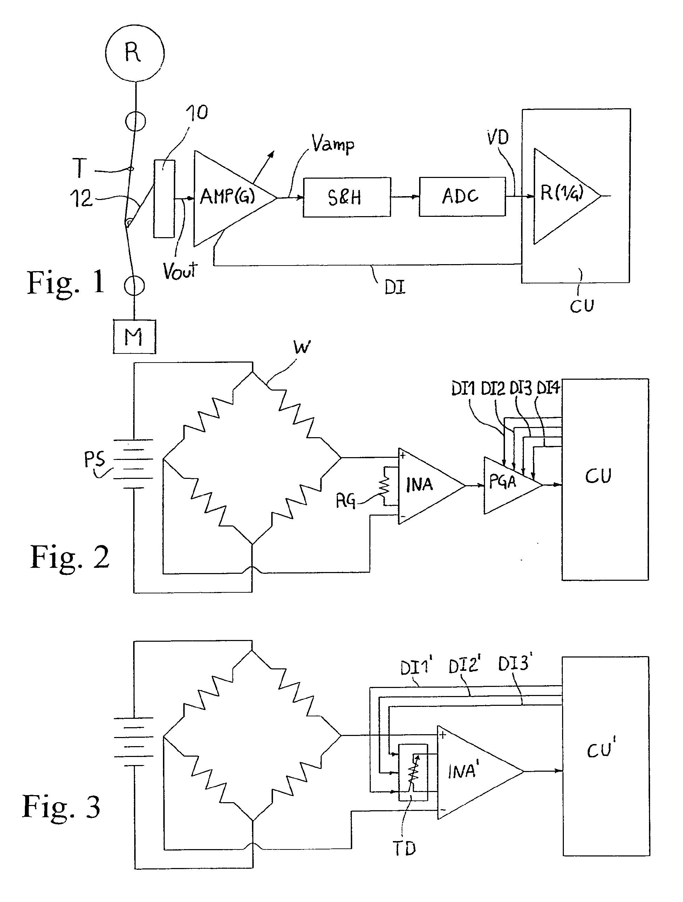

In Fig. 1, a yarn T is delivered from a reel R to a general machine M such as a textile loom, a knitting machine, a spooler, a yarn feeder, and the like (not shown).

A tension sensor 10 is arranged along the path of yarn T to measure the mechanical tension of the latter, and to this purpose it is provided with a flexible mechanical member 12 which engages the yarn and deviates its path. Therefore, flexible member 12 is subjected to the transverse component of the yarn tension, and differently bends as a function of the yarn tension.

In a way known per se, tension sensor 10 incorporates a measuring circuit (not shown) adapted to convert the bending of the flexible member into an electrical output signal Vout that is proportional to the yarn tension, which circuit will be described in more detail below.

Electrical output signal Vout is amplified by a factor G by an adjustable electronic amplification circuit AMP. This amplified signal Vamp is received by a sample-and-hold circuit S&H, and is converted from an analog signal to a digital signal by a converter AD generating a digital output signal VD.

Digital output signal VD is transmitted to a control unit CU, e.g., a microprocessor, a microcontroller, a Digital Signal Processor (DSP) or a Digital Signal Controller (DSC), which is programmed to control electronic amplifier circuit AMP with command signals DI capable of automatically adjusting the gain by means of a procedure which will be better described below. Control unit CU comprises a shift block R adapted to shift digital output signal VD by a factor I/G, e.g., by multiplying it by, or by shifting it of, a predetermined number of bits, in order to prevent distorsions due to any change of gain commanded by the control unit.

In a first embodiment of the invention, as shown in Fig. 2, the measuring circuit incorporated in the sensor consists of a Wheatstone bridge W supplied by a constant voltage source PS, while the electronic amplification circuit which receives the differential signal from the Wheatstone bridge comprises a preamplification stage which consists of an instrumentation differential amplifier INA having a fixed gain depending on the value of an electric resistor RG connected across two terminals of the amplifier, and a final amplification stage consisting of an electronic amplification circuit PGA having a programmable gain and driven to change its gain value on the basis of the configuration of a plurality of digital inputs, DI1, DI2, DI3, DI4 generated by control unit CU.

In use, the above-described circuit allows the gain to be adjusted during the first setting of the sensor, either manually or automatically. With the automatic procedure, the sensor is loaded by a yarn subjected to a predetermined nominal tension, and the control unit is programmed to perform a sequential scanning procedure over all the admissible gains, and to select the gain which minimizes the difference between all the amplified signals and a sample signal having a desired nominal amplitude.

Furthermore, the control unit in the apparatus according to the invention allows the gain to be adjusted while the sensor is working, in order to optimize the resolution on the basis of a detected average tension or of a tension set by the user. In particular, control unit CU is programmed in such a way that, with tensions in the range between a half of the full-scale and the full-scale, a gain equal to the nominal gain is selected, with tensions in the range between one fourth and a half of the full-scale, a doubled gain is selected, with tensions in the range between one eighth and one fourth of the full-scale, a quadrupled gain is selected, etc.. Accordingly, when the process envisages relatively high average tensions, a lower resolution is used, while a higher resolution is used when the process envisages average tensions of a few grams. Of course, other distributions of the measuring range of the sensor are possible, and it is not even indispensable to proceed by successively doubling the gain of the amplification stage.

As the person skilled in the arti will immediately understand, the yarn tension measuring apparatus according to the invention allows the tuning to be carried out more quickly, more economically, and with a higher degree of repeatability with respect to the prior art, because it is automatically managed by the control unit.

Fig. 3 shows an alternative embodiment of the invention, in which instrumentation differential amplifier INA' has a digital trimmer TD with a variable resisting value connected across two of its teminals, instead of a resistor having a fixed value. Therefore, the embodiment of Fig. 3 is not provided with a final amplification stage PGA because control unit CU' changes the value of the amplification stage by directly sending the command digital signals DI1', DI2', DI3' to digital trimmer TD in order to change its value of resistance.

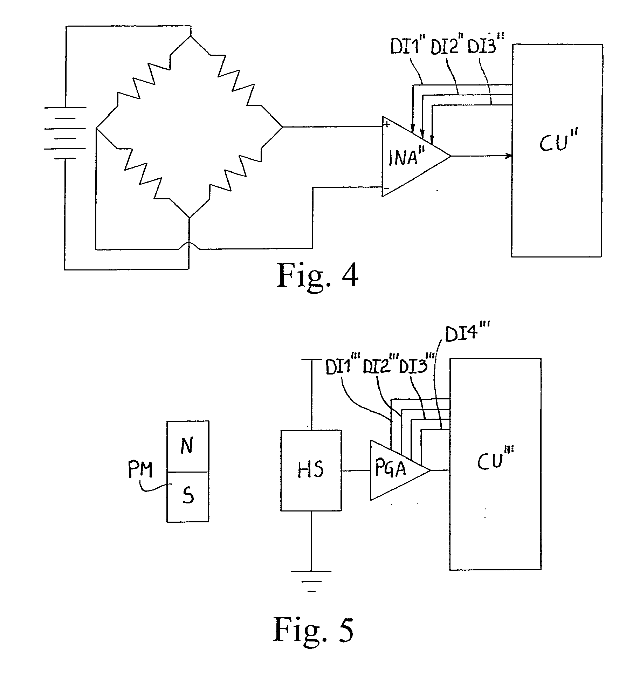

Another alternative embodiment of the circuit is shown in Fig. 4, wherein instrumentation differential amplifier INA" is of the known type which incorporates a circuitry that changes the gain on the basis of the command digital signals DI1", DI2", DI3" received from control unit CU".

A further alternative embodiment of the circuit is shown in Fig. 5, wherein the tension sensor consists of an analog, electronic Hall sensor HS, which cooperates with a permanent magnet PM with N/S polarization. The Hall sensor is integral with the flexible mechanical member and consequently it moves following the changes of the yarn tension. In the embodiment of Fig. 5, the amplification is provided by a programmable gain amplification electronic circuit PGA driven by control unit CU''' via command digital signals DI1''', DI2''', DI3''', DI4'''.

A few preferred embodiments of the invention have been described herein, but of course several changes may be made by a person skilled in the art within the scope of the claims. For instance, although in the above-described embodiments the yarn-tension sensor employs sampling circuits and analog-to-digital conversion circuits which are incorporated in microcontrollers or DSC, it is possible to employ programmable analog circuits which also incorporate amplification means, such as the so-called "PSoC" systems (Programmable System on Chip). Of course, control unit CU could also incorporate one or more of the above-described functional blocks, such as the amplification stage, the sample-and-hold stage, and the analog-to-digital conversion stage.

## Claims

1. A yarn tension measuring apparaturs, **characterized in that** it comprises:
- a tension sensor (10) arranged to measure the yarn tension (T) and to generate an electric output signal (Vout) that is variable as a function of the yarn tension,
- amplification means (AMP, INA, PGA) for said output signal (Vout), which have a gain value (G) that is variable under control of digital pulses,
- analog-to-digital conversion means for said electric output signal (Vout), which generate a digital output signal (VD),
- a control unit (CU) connected to receive said digital output signal (VD) and programmed to control said amplification means (AMP, INA, PGA) by digital pulses defining command signals (DI) adapted to select a desired gain.

2. The apparatus of claim 1, **characterized in that** said amplification means comprise a preamplification stage (INA) having a fixed gain, as well as a final amplification stage (PGA) having a programmable gain, which is connected to receive said command signal (DI1, DI2, DI3, DI4) from said control unit (CU).

3. The apparatus of claim 2, **characterized in that** said preamplification stage (INA) consists of an instrumentation differential amplifier (INA).

4. The apparatus of claim 1, **characterized in that** said amplification means comprise an instrumentation differential amplifier (INA') having a digital trimmer (TD) with a variable resisting value connected across two teminals of the amplifier, which is connected to receive said command signal (DI1', DI2', DI3') from said control unit (CU').

5. The apparatus of claim 1, **characterized in that** said amplification means comprise an instrumentation differential amplifier (INA"), which incorporates a circuitry adapted to change its gain value on the basis of digital signals, and is connected to receive said command signal (DI1", DI2", DI3") from said control unit (CU").

6. The apparatus of any of claims 1 to 5, **characterized in that** said tension sensor is of the type comprising a flexible mechanical member (12) which is subjected to the transverse component of the yarn tension and incorporates a circuit (W) adapted generate an electrical output signal (Vout) that is variable as a function of the bending of said flexible mechanical member (12).

7. The apparatus of any of claims 1 to 5, **characterized in that** said tension sensor is of the type comprising a flexible mechanical member (12) which is subjected to the transverse component of the yarn tension, and an analog, electronic Hall sensor (HS) integral with the flexible mechanical member and cooperating with a permanent magnet (PM) with N/S polarization.

8. The apparatus of any of claims 1 to 7, **characterized in that** said control unit (CU) is programmed to execute an automatic tuning procedure comprising the steps of:
- executing a sequential scanning over all the admissible gains, and
- selecting the gain which minimizes the difference between all the amplified signals and a sample signal having an amplitude equal to a desired nominal amplitude when the sensor is loaded with a yarn subjected to a predetermined tension.

9. The apparatus of any of claims 1 to 8, **characterized in that** said control unit (CU) is programmed to automatically increase the gain (G) as the average tension detected in operation decreases.

10. The apparatus of any of claims 1 to 8, **characterized in that** said control unit (CU) is programmed to automatically increase the gain (G) as an average tension set by the user decreases.

11. The apparatus of claim 9 or 10, **characterized in that** said control unit (CU) is programmed to use a gain that is doubled at each of a successive range of average tension comprising progressively lower values.
